(19) Europäisches Patentamt / European Patent Office / Office européen des brevets

(11) **EP 4 199 456 A1**

(12) **EUROPEAN PATENT APPLICATION**

(43) Date of publication:
21.06.2023 Bulletin 2023/25

(51) International Patent Classification (IPC):
**H04L 41/16** (2022.01)     *H04L 43/062* (2022.01)

(21) Application number: **22183938.4**

(52) Cooperative Patent Classification (CPC):
**H04L 41/16;** H04L 43/062

(22) Date of filing: **08.07.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.12.2021 CN 202111547024**

(71) Applicant: **BEIJING BAIDU NETCOM SCIENCE AND TECHNOLOGY CO. LTD.**
**100085 Beijing (CN)**

(72) Inventors:
• LIU, Ji
  **Beijing, 100085 (CN)**
• ZHANG, Jiayuan
  **Beijing, 100085 (CN)**
• ZHOU, Ruipu
  **Beijing, 100085 (CN)**
• DOU, Dejing
  **Beijing, 100085 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **TRAFFIC CLASSIFICATION METHOD AND APPARATUS, TRAINING METHOD AND APPARATUS, DEVICE AND MEDIUM**

(57) The present disclosure provides a traffic classification method and apparatus, a training method and apparatus, a device and a medium, and relates to the field of artificial intelligence, in particular to the technical field of big data. An implementation is: performing a preprocessing operation on each characteristic of one or more characteristics of an object to be classified, wherein the preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic; and inputting the one or more characteristics of the object to be classified into a traffic classifier to determine a traffic type of the object to be classified.

200

Fig. 2

Description

TECHNICAL FIELD

The present disclosure relates to the technical field of artificial intelligence, in particular to the technical field of big data, and more specifically to a computer-implemented traffic classification method, a training method of a traffic classifier, an apparatus, an electronic device, a computer readable storage medium and a computer program product.

BACKGROUND

Artificial intelligence is a subject that studies the use of a computer to simulate certain thinking processes and intelligent behaviors (for example, learning, reasoning, thinking, planning, etc.) of people, involving both hardware-level technologies and software-level technologies. Artificial intelligence hardware technologies generally include sensors, dedicated artificial intelligence chips, cloud computing, distributed storage, big data processing, etc. Artificial intelligence software technologies mainly include computer vision technology, speech recognition technology, natural language processing technology, machine learning/depth learning, big data processing technology, mapping knowledge domain technology, etc.

With the development of the Internet technology, the importance of network security has become increasingly prominent. Specifically, how to classify network traffic to identify malicious traffic is a key problem to be solved urgently.

The methods described in this section are not necessarily methods that have been previously conceived of or employed. Unless otherwise stated, it should not be assumed that any of the methods described in this section are considered as prior art since they are included in this section. Similarly, unless otherwise stated, the problem mentioned in this section should not be considered as universally recognized in any prior art.

SUMMARY

The present disclosure provides a computer-implemented traffic classification method, a training method of a traffic classifier, an apparatus, an electronic device, a computer readable storage medium and a computer program product.

According to an aspect of the present disclosure, a computer-implemented traffic classification method is provided which includes: performing a preprocessing operation on each characteristic of one or more characteristics of an object to be classified; and inputting the one or more characteristics of the object to be classified into a traffic classifier to determine a traffic type of the object to be classified. The preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic.

According to another aspect of the present disclosure, a training method of a traffic classifier is provided. A training set for the traffic classifier includes a plurality of sample objects. The training method includes: performing a preprocessing operation on each characteristic of one or more characteristics of each sample object; and training the traffic classifier based on the one or more characteristics of the sample object in the training set. The preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic.

According to another aspect of the present disclosure, a traffic classification apparatus is provided which includes: a preprocessing module configured to perform a preprocessing operation on each characteristic of one or more characteristics of an object to be classified, wherein the preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic; and a traffic classification module configured to input the one or more characteristics of the object to be classified into a traffic classifier to determine a traffic type of the object to be classified.

According to another aspect of the present disclosure, a training apparatus of a traffic classifier is provided. A training set for the traffic classifier includes a plurality of sample objects. The training apparatus includes: a preprocessing module configured to perform a preprocessing operation on each characteristic of one or more characteristics of each sample object, wherein the preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic; and a classifier training module configured to train the traffic classifier based on the one or more characteristics of the sample object in the training set.

According to another aspect of the present disclosure, an electronic device is provided which includes: at least one processor; and a memory in communication connection with the at least one processor. The memory stores instructions executable by the at least one processor which, when executed by the at least one processor, cause the at least one processor to perform the traffic classification method and/or the training method described in the present disclosure.

According to another aspect of the present disclosure, a non-transitory computer readable storage medium storing computer instructions is provided. The computer instructions are executed to cause a computer to perform the traffic classification method and/or the training method described in the present disclosure.

According to another aspect of the present disclosure, a computer program product is provided which includes a computer program which, when executed by a processor, implements the traffic classification method and/or the training method described in the present disclosure.

According to one or more embodiments of the present disclosure, malicious traffic can be accurately and efficiently recognized.

It should be appreciated that what is described in this section is not intended to indicate key or important features of the embodiments of the present disclosure, nor is it intended to limit the scope of the present disclosure. Other features of the present disclosure will become apparent from the following description.

## BRIEF DESCRIPTION OF THE DRAWINGS

The drawings exemplarily illustrate embodiments and form a part of the specification. Together with the textual description of the specification, the drawings serve to explain the example implementations of the embodiments. The embodiments shown are merely for illustrative purposes rather than limiting the scope of the claims. Throughout the drawings, the same reference numerals refer to similar but not necessarily identical elements.

Fig. 1 illustrates a schematic diagram of an example system in which various methods described herein may be implemented according to embodiments of the present disclosure;
Fig. 2 illustrates a flow chart of a computer-implemented traffic classification method according to an embodiment of the present disclosure;
Fig. 3 illustrates a flow chart of an example process of normalizing a characteristic value of a characteristic according to an embodiment of the present disclosure;
Fig. 4 illustrates a flow chart of a training method of a traffic classifier according to an embodiment of the present disclosure;
Fig. 5 illustrates a flow chart of an example process of normalizing a characteristic value of a characteristic according to an embodiment of the present disclosure;
Fig. 6 illustrates a structural block diagram of a traffic classification apparatus according to an embodiment of the present disclosure;
Fig. 7 illustrates a structural block diagram of a training apparatus of a traffic classifier according to an embodiment of the present disclosure; and
Fig. 8 illustrates a structural block diagram of an example electronic device that can be used to implement embodiments of the present disclosure.

## DETAILED DESCRIPTION

The example embodiments of the present disclosure are described below with reference to the accompanying drawings, which include various details of the embodiments of the present disclosure for better understanding and should be regarded as examples only. Therefore, those ordinarily skilled in the art should recognize that various changes and modifications can be made to the embodiments described herein without departing from the scope of the present disclosure. Similarly, description for known functions and structures is omitted from the following description for clarity and conciseness.

In the present disclosure, unless otherwise stated, the terms "first", "second", etc., used to describe various elements are not intended to limit the positional relationship, timing relationship or importance relationship of these elements. These terms are only used to distinguish one component from another. In some examples, a first element and a second element may refer to the same instance of the element. In some cases, the first element and the second element may refer to different instances based on the contextual description.

The terms used in the description of the various embodiments of the present disclosure are for the purpose of describing specific examples and are not intended to limit the present disclosure. Unless otherwise clearly indicated in the context, if the number of elements is not specifically limited, there may be one or more elements. Moreover, the term "and/or" used in the present disclosure is intended to cover any and all possible combinations of the listed items.

In the technical field of network security, efficient and accurate detection of malicious traffic is desirable to prevent illegal intrusions by malware developers as much as possible. On this basis, the present disclosure provides a computer-implemented traffic classification method, which effectively utilized one or more characteristics of the traffic by preprocessing the one or more characteristics of traffic, thereby achieving efficient and accurate classification of traffic types.

The embodiments of the present disclosure will be described in detail below with reference to the accompanying drawings.

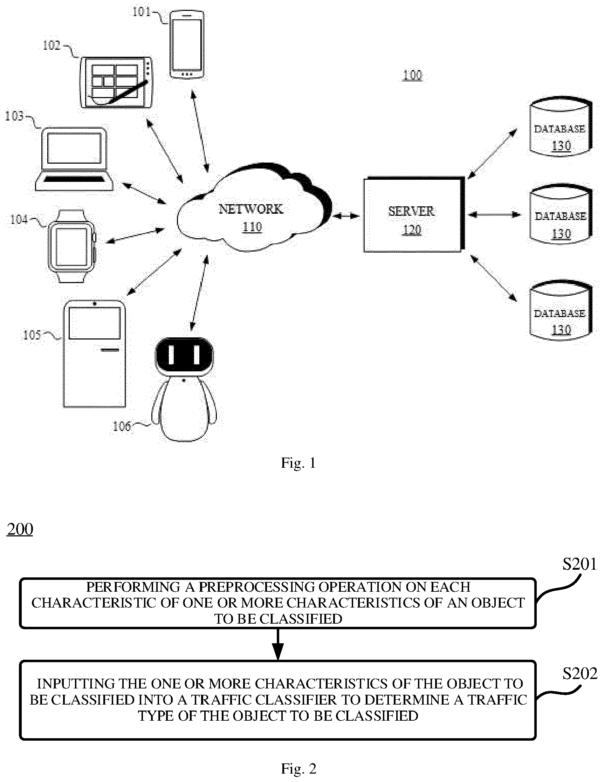

Fig. 1 illustrates a schematic diagram of an example system 100 in which various methods and apparatuses described herein may be implemented according to embodiments of the present disclosure. Referring to Fig. 1, the system 100 includes one or more client devices 101, 102, 103, 104, 105 and 106, a server 120, and one or more communication networks 110 coupling the one or more client devices to the server 120. The client devices 101, 102, 103, 104, 105 and 106 may be configured to execute one or more applications.

In the embodiments of the present disclosure, the server 120 may run one or more services or software applications that are capable of performing the traffic classification method and/or the training method described in the present disclosure.

In some embodiments, the server 120 may also provide other services or software applications that may include non-virtual and virtual environment. In some embodiments, these services may be provided as web-based or cloud services, such as under a Software as a Service (SaaS) model to the users of the client devices 101, 102, 103, 104, 105 and/or 106.

In the configuration depicted in Fig. 1, the server 120 may include one or more components that implement functions performed by the server 120. These components may include software components that may be executed by one or more processors, hardware components or a combination thereof. Users operating the client devices 101, 102, 103, 104, 105 and/or 106 may in turn utilize one or more client applications to interact with the server 120 to utilize services provided by these components. It should be appreciated that various different system configurations are possible, which may be different from the system 100. Therefore, Fig. 1 is an example of a systems for implementing various methods described herein and is not intended to be limiting.

Users may use the client devices 101, 102, 103, 104, 105 and/or 106 to initiate communication with the server 120 (for example, through DoH or other types of network protocols). The client devices may provide interfaces that enable the users of the client devices to interact with the client devices. The client devices may also output information to the user via the interfaces. Although Fig. 1 depicts only six types of client devices, it should be appreciated for those skilled in the art that any number of client devices may be supported according to the present disclosure.

The client devices 101, 102, 103, 104, 105 and/or 106 may include various types of computer devices such as portable handheld devices, general purpose computers such as personal computers and laptops, workstation computers, wearable devices, smart screen devices, self-service terminal devices, service robots, gaming systems, thin clients, various messaging devices, sensors or other sensing devices, and the like. These computing devices may run various types and versions of software applications and operating systems such as Microsoft Windows, Apple iOS, UNIX-like operating systems, Linux or Linux-like operating systems such as Google Chrome OS; or include various mobile operating systems such as Microsoft Windows Mobile OS, iOS, Windows Phone, Android. Portable handheld devices may include cellular phones, smartphones, tablets, personal digital assistants (PDAs), and the like. Wearable devices may include head mounted display such as smart glasses, and other devices. Gaming systems may include various handheld gaming devices, Internet-enabled gaming devices, and the like. The client devices may be capable of executing various different applications such as various Internet-related apps, communication applications such as E-mail applications, short message service (SMS) applications and may use various communication protocols.

The networks 110 may be any type of network familiar to those skilled in the art that may support data communications using any of a variety of available protocols including, but not limited to, TCP/IP, SNA, IPX, and the like. Merely by way of example, the one or more networks 110 can be a local area network (LAN), networks based on Ethernet, Token-Ring, a wide-area network (WAN), the Internet, a virtual network, a virtual private network (VPN), an intranet, an extranet, a public switched telephone network (PSTN), an infra-red network, a wireless network such as blue tooth, WIFI, and/or any combination of these and/or other networks.

The server 120 may include one or more general purpose computers, application specific server computers such as PC (personal computer) servers, UNIX servers, and midrange servers, blade servers, mainframe computers, server clusters, or any other appropriate arrangement and/or combination. The server 120 may include one or more virtual machines running virtual operating systems, or other computing architectures involving virtualization such as one or more flexible pools of logical storage devices that may be virtualized to maintain virtual storage devices for the server.

In various embodiments, the server 120 may run one or more services or software applications that provide the functions described below.

A computing unit in the server 120 may run one or more operating systems including any of the operating systems described above, as well as any commercially available server operating systems. The server 120 may also run any of a variety of additional server applications and/or middle-tier applications, including HTTP servers, FTP servers, CGI servers, JAVA servers, database servers, and the like.

In some implementations, the server 120 may include one or more applications to analyze and consolidate data feeds and/or event updates received from users of the client devices 101, 102, 103, 104, 105, and/or 106. The server 120 may also include one or more applications to display the data feeds and/or real-time events via one or more display devices of the client devices 101, 102, 103, 104, 105, and/or 106.

In some implementations, the server 120 may be a server of a distributed system, or a server combined with a blockchain. The server 120 may also be a cloud server, or an intelligent cloud computing server or an intelligent cloud host with artificial intelligence technology. The cloud server is a host product in a cloud computing service system to overcome the defects of high management difficulty and weak business expansibility for a traditional physical host and virtual private server (VPS) services.

The system 100 may also include one or more databases 130. In some embodiments, these databases may be used to store data and other information. For example, one or more of the databases 130 may be used to store information such as audio files and video files. The databases 130 may reside in a variety of locations. For example, a database used by the server 120 may be local to the server 120 or may be remote from the server 120 and in communication with the server 120 via a network-based or a dedicated connection. The databases 130 may be of different types. In some embodiments, the database used by the server 120 may be, for example, a relational database. One or more of these databases may be adapted to enable storage, update, and retrieval of data to and from the databases in response to commands.

In some embodiments, one or more of the databases 130 may also be used by an application to store application data. The databases used by the application may be of different types such as a key-value storage repository, an object storage repository, or a general storage repository supported by a file system.

The system 100 in Fig. 1 may be configured and operated in various ways to enable various methods and apparatuses according to the present disclosure.

Fig. 2 illustrates a flow chart of a computer-implemented traffic classification method 200 according to an embodiment of the present disclosure.

As shown in Fig. 2, the method includes: step S201, performing a preprocessing operation on each characteristic of one or more characteristics of an object to be classified, wherein the preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic; and step S202, inputting the one or more characteristics of the object to be classified into a traffic classifier to determine a traffic type of the object to be classified.

By preprocessing of the one or more characteristics of the traffic, the one or more characteristics of the traffic are effectively utilized, thereby achieving efficient and accurate classification of traffic types. Specifically, there may be problems that data is missing or data does not meet requirements (for example, the data value is NaN) during data collection. By setting the invalid data to the null value, the invalid data is prevented from interfering with a judgment result; by converting the non-numeric characteristic value to the integer value, subsequent numerical processing (e.g., in a classifier) is facilitated; by normalizing the non-port characteristic, a difference in contributions of characteristics at different scales is avoided; and by not normalizing port characteristics (e.g., source port characteristics and target port characteristics), an original interpretation for the port characteristic is preserved.

According to some embodiments, converting, in response to determining that the characteristic is the non-numeric characteristic, the characteristic value of the characteristic to the integer value includes: in response to determining that the characteristic is an IP address characteristic, for each segment of address of the characteristic, multiplying the segment of address of the characteristic by a factor corresponding to the segment of address to obtain a product corresponding to the segment of address; and calculating a sum of the products corresponding to the address of the characteristic as the characteristic value of the characteristic.

For example, the conversion process for an IP address 192.168.20.291 is as follows:

$$2^{24*}192+2^{16*}168+2^{8*}20+2^{0*}291=323224083,$$

where the IP address includes four segments of address "192", "168", "20" and "291" spaced by ".", and the factors for these four segments of address is "224", "216", "28" and "20", respectively.

According to some embodiments, 5 digits are reserved for the characteristic value of the characteristic in response to determining that the characteristic is a floating-point type of characteristic.

According to some embodiments, normalizing, in response to determining that the characteristic is the non-port characteristic, the characteristic value of the characteristic includes: calculating a difference between the characteristic value of the characteristic and a lower limit value of the characteristic as a first difference; calculating a difference between an upper limit value and the lower limit value of the characteristic as a second difference; and calculating a ratio of the first difference to the second difference as the characteristic value of the characteristic.

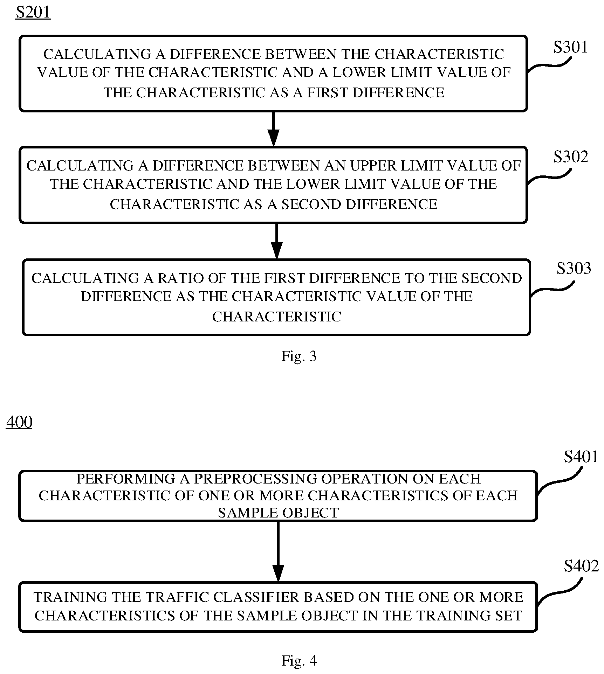

Fig. 3 illustrates a flow chart of an example process of normalizing a characteristic value of a characteristic according to an embodiment of the present disclosure.

At step S301, a difference between the characteristic value of the characteristic and the lower limit value of the characteristic is calculated as the first difference;

at step S302, a difference between the upper limit value and the lower limit value of the characteristic is calculated as the second difference; and

at step S303, a ratio of the first difference to the second difference is calculated as the characteristic value of the characteristic.

According to some embodiments, the upper limit value of the characteristic may be a maximum value of the characteristic values of the characteristics in historical traffic data (for example, traffic data in a training set or traffic data in a past period of time), and the lower limit value of the characteristic may be a minimum value of the characteristic values of the characteristics in historical traffic data (for example, sample objects in the training set or objects to be classified processed in a past period of time).

According to some other embodiments, in addition to the above method, other methods may also be used to normalizing the characteristic value of the non-port characteristic, such as log function conversion.

According to some embodiments, the one or more characteristics of the object to be classified may include at least one of: an IP address characteristic, a port characteristic, a duration characteristic, a characteristic of the number of bytes sent by stream, a characteristic of the number of bytes received by stream, a stream sending rate characteristic, a stream receiving rate characteristic, a frame length statistic characteristic, a frame time statistic characteristic and a response time statistic characteristic.

According to some embodiments, the IP address characteristic may be a source IP address and/or a target IP address; the port characteristic may be a source port characteristic and/or a target port characteristic; the frame length statistic characteristic may be a frame length variance, a frame length standard deviation, a frame length average, a frame length median, a frame length mode, a frame length deviation median, a frame length deviation mode, and/or a frame length variation coefficient; the frame time statistic characteristic may be a frame time variance, a frame time standard deviation, a frame time average, a frame time median, a frame time mode, a frame time deviation median, a frame time deviation mode, and/or a frame time variation coefficient; and the response time statistic characteristic may be a response time variance, a response time standard deviation, a response time average, a response time median, a response time mode, a response time deviation median, a response time deviation mode, and/or a response time variation coefficient.

According to some embodiments, the traffic classifier includes at least one of: a K-nearest neighbor classifier; a decision tree classifier; and a random forest classifier. The three classifiers are described below respectively:

1) K-nearest neighbor classifier

In the K-nearest neighbor classifier, K neighbor objects in sample objects nearest to the object to be classified are found based on a distance metric, and then the traffic type of the object to be classified is determined based on the information of the K neighbor objects.

According to some embodiments, a type that appears most among the K neighbor objects is selected as the type of the object to be classified. According to some other embodiments, weighted voting may also be performed according to distances of the neighbor objects, where a weight of a closer neighbor object is greater.

According to some embodiments, the distance metric used in the K-nearest neighbor classifier may be the Euclidean distance between the object to be classified and the sample object. The Euclidean distance may be calculated based on characteristic values of the one or more characteristics of the objects.

2) Decision tree classifier

In the decision tree classifier, a corresponding characteristic is judged at each node, and according to a judgment result, the decision tree classifier proceeds to a final classification result or a next node for further judgment.

3) Random forest classifier

The random forest classifier includes a large number of individual decision trees that operate as a set. Each decision tree gives a classification result, and the classification result with the most votes is used as the classification result of the object to be classified.

According to some embodiments, each decision tree in the random forest classifier uses different characteristic sets of the object to be classified for classification. For example, a decision tree 1 may use the IP address characteristic, the port characteristic, and the duration characteristic for classification, while a decision tree 2 may use the characteristic of the number of bytes sent by stream, the characteristic of the number of bytes received by stream, and the response time statistic characteristic for classification.

According to some embodiments, the object to be classified is DoH traffic, and the traffic type of the object to be classified is benign traffic or malicious traffic. DoH aims to improve security by hiding DNS inquiry while preventing DNS spoofing and man-in-the-middle attack. However, since the DNS traffic is encapsulated in HTTPS through DoH, network infrastructure between a malware client and a DoH server is unaware of the underlying DNS traffic. Therefore, with the traffic classification method for classification based on the characteristics of the object to be classified as described in the present disclosure, potential network attack from unknown traffic can be effectively and accurately predict.

According to some embodiments, the preprocessing operation further includes: removing a timestamp characteristic of the one or more characteristics of the object to be classified.

Fig. 4 illustrates a flow chart of a training method 400 of a traffic classifier according to an embodiment of the present disclosure. According to some embodiments, a training set for the traffic classifier includes a plurality of sample objects.

As shown in Fig. 4, the method includes: step S401, performing a preprocessing operation on each characteristic of one or more characteristics of each sample object, wherein the preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic; and step S402, training the traffic classifier based on the one or more characteristics of the sample object in the training set.

According to some embodiments, the sample objects of the training set may be generated through access to a website. The sample objects include malicious traffic objects and benign traffic objects. According to some embodiments, the sample objects are encoded, where "0" represents a malicious traffic object and "1" represents a benign traffic object.

According to some embodiments, a sample object in the training set is removed when the sample object includes null attribute data.

According to some embodiments, 5 digits are reserved for the characteristic value of the characteristic in response to determining that the characteristic is a floating-point type of characteristic.

According to some embodiments, converting, in response to determining that the characteristic is the non-numeric characteristic, the characteristic value of the characteristic to the integer value includes: in response to determining that the characteristic is an IP address characteristic, for each segment of address of the characteristic, multiplying the segment of address of the characteristic by a factor corresponding to the segment of address to obtain a product corresponding to the segment of address; and calculating a sum of the products corresponding to the address of the characteristic as the characteristic value of the characteristic.

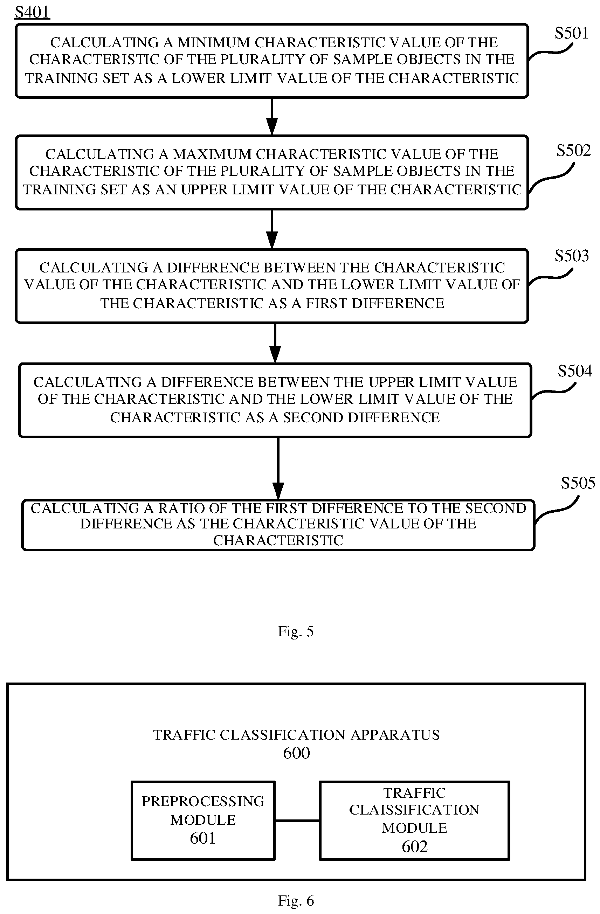

Fig. 5 illustrates a flow chart of an example process of normalizing the characteristic value of the characteristic in the method in Fig. 4 according to an embodiment of the present disclosure.

At step S501, a minimum characteristic value of the characteristic of the plurality of sample objects in the training set is calculated as a lower limit value of the characteristic;

at step S502, a maximum characteristic value of the characteristic of the plurality of sample objects in the training set is calculated as an upper limit value of the characteristic;
at step S503, a difference between the characteristic value of the characteristic and the lower limit value of the characteristic is calculated as a first difference;
at step S504, a difference between the upper limit value and the lower limit value of the characteristic is calculated as a second difference; and
at step S505, a ratio of the first difference to the second difference is calculated as the characteristic value of the characteristic.

According to some other embodiments, in addition to the above method, other methods may also be used to normalizing the characteristic value of the non-port characteristic, such as log function conversion.

According to some embodiments, the one or more characteristics of the sample objects may include at least one of: an IP address characteristic, a port characteristic, a duration characteristic, a characteristic of the number of bytes sent by stream, a characteristic of the number of bytes received by stream, a stream sending rate characteristic, a stream receiving rate characteristic, a frame length statistic characteristic, a frame time statistic characteristic and a response time statistic characteristic.

According to some embodiments, the **IP** address characteristic may be a source **IP** address and/or a target **IP** address; the port characteristic may be a source port characteristic and/or a target port characteristic; the frame length statistic characteristic may be a frame length variance, a frame length standard deviation, a frame length average, a frame length median, a frame length mode, a frame length deviation median, a frame length deviation mode, and/or a frame length variation coefficient; the frame time statistic characteristic may be a frame time variance, a frame time standard deviation, a frame time average, a frame time median, a frame time mode, a frame time deviation median, a frame time deviation mode, and/or a frame time variation coefficient; and the response time statistic characteristic may be a response time variance, a response time standard deviation, a response time average, a response time median, a response time mode, a response time deviation median, a response time deviation mode, and/or a response time variation coefficient.

According to some embodiments, the same preprocessing is performed on the sample object in the testing set of the traffic classifier and the sample object in the training set to ensure the accuracy of the test result.

According to some embodiments, the training method of the traffic classifier as described in the present disclosure further includes: generating, for a traffic type with a proportion in the training set less than a proportion threshold, one or more extended objects based on the sample object corresponding to the traffic type; and adding the one or more extended objects to the training set. By balancing the ratio of the benign traffic objects to the malicious traffic objects, a balance of training data is achieved, so as to ensure that types in the minority will not be ignored in subsequent training, ensuring the performance of the types in the minority.

According to some embodiments, a new sample object may be synthesized based on the sample object corresponding to the traffic type. According to some other embodiments, the sample object corresponding to the traffic type may be directly copied without adding a new sample object to the training set.

According to some embodiments, the traffic classifier includes at least one of: a K-nearest neighbor classifier; a decision tree classifier; and a random forest classifier.

According to some embodiments, training of the K-nearest neighbor classifier includes: determining the K value and the number of neighbor samples in the K-nearest neighbor classifier based on the one or more characteristics of the sample object in the training set.

According to some embodiments, training of the decision tree classifier includes: determining a tree structure of the decision tree classifier and/or a characteristic corresponding to each node and a classification threshold based on the one or more characteristics of the sample object in the training set.

According to some embodiments, training of the random forest classifier includes: determining the number of the decision trees, the tree structures of the decision trees and/or a characteristic corresponding to each node and a classification threshold in the random forest classifier based on the one or more characteristics of the sample object in the training set.

According to some embodiments, the sample object is DoH traffic, and the traffic type of the sample object includes benign traffic or malicious traffic.

According to some embodiments, the preprocessing operation further includes: removing a timestamp characteristic of the one or more characteristics of the sample object.

According to some embodiments, four indicators: precision, accuracy, recall rate and F1 score may be used to evaluate the performance of the classifier:

First, a confusion matrix shown in Table 1 is used to divide the sample objects.

Table 1 Confusion Matrix

|  | Determined to be malicious | Determined to be benign |
|---|---|---|
| Actually malicious | True positive (TP) | False negative (FN) |
| Actually benign | False positive (FP) | True negative (TN) |

Then, the above indicators are calculated:

1) Precision

Precision refers to a proportion of objects that are actually malicious among objects determined to be malicious which is calculated as follows:

$$Precision = \frac{TP}{TP + FP}$$

where Precision is the precision, TP is the number of true positive objects, and FP is the number of false positive objects.

2) Accuracy

Accuracy refers to a proportion of objects correctly detected among the total detected objects, which is calculated as follows:

$$Accuracy = \frac{TP + TN}{TP + TN + FP + FN}$$

where Accuracy is the accuracy, TP is the number of true positive objects, FP is the number of false positive objects, TN is the number of true negative objects, and FN is the number of false negative objects.

3) Recall rate

Recall rate refers to a proportion of objects determined to be malicious among objects that are actually malicious, which is calculated as follows:

$$Recall = \frac{TP}{TP + FN}$$

where Recall is the recall rate, TP is the number of true positive objects, and FN is the number of false negative objects.

4) F1 score

F1 score is a harmonic mean of the precision and the recall rate, which is calculated as follows:

$$F1\_Score = 2 \times \frac{Precision * Recall}{Precision + Recall}$$

where F1_Score is the F1 score.
Fig. 6 illustrates a structural block diagram of a traffic classification apparatus 600 according to an embodiment of the present disclosure.
As shown in Fig. 6, the traffic classification apparatus 600 includes: a preprocessing module 601 configured to perform a preprocessing operations on each characteristic of one or more characteristics of an object to be classified, wherein the preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic; and a traffic classification module 602 configured to input the one or more characteristics of the object to be classified into a traffic classifier to determine a traffic type of the object to be classified.

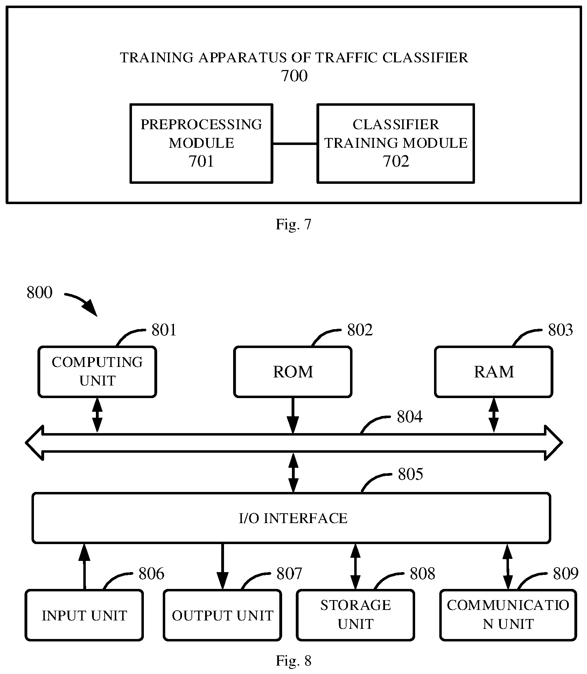

Fig. 7 illustrates a structural block diagram of a training apparatus 700 of a traffic classifier according to an embodiment of the present disclosure.
As shown in Fig. 7, the training apparatus 700 of the traffic classifier includes: a preprocessing module 701 configured to perform a preprocessing operation on each characteristic of one or more characteristics of each sample object, wherein the preprocessing operation includes at least one of: setting, in response to determining that a characteristic value of the characteristic is invalid data, the characteristic value to a null value; converting, in response to determining that the characteristic is a non-numeric characteristic, the characteristic value of the characteristic to an integer value; and normalizing, in response to determining that the characteristic is a non-port characteristic, the characteristic value of the characteristic; and a classifier training module 702 configured to train the traffic classifier based on the one or more characteristics of the sample object in a training set.

According to an embodiment of the present disclosure, an electronic device is further provided which includes: at least one processor; and a memory in communication connection with the at least one processor. The memory stores instructions executable by the at least one processor which, when executed by the at least one processor, cause the at least one processor to perform any of the methods described above.

According to an embodiment of the present disclosure, a non-transitory computer readable storage medium storing computer instructions is further provided. The computer instructions are executed to cause a computer to perform any of the methods described above.

According to an embodiment of the present disclosure, a computer program product is further provided, which includes a computer program which, when executed by a processor, implements any of the methods described above.

Referring to Fig. 8, a structural block diagram of an electronic device 800 that may serve as a server or a client of the present disclosure will now be described, which is an example of hardware devices that may be applied to various aspects of the present disclosure. The electronic device is intended to represent various forms of digital electronic computer devices, such as laptop computers, desktop computers, workstations, personal digital assistants, servers, blade servers, mainframe computers, and other suitable computers. The electronic device may also represent various forms of mobile devices, such as personal digital processors, cellular phones, smart phones, wearable devices, and other similar computing devices. The components shown herein, their connections and relationships, and their functions serve as examples only, and are not intended to limit implementations of the disclosure described and/or claimed herein.

As shown in Fig. 8, the electronic device 800 includes a computing unit 801 which may perform various appropriate actions and processing according to a computer program stored in a read-only memory (ROM) 802 or a computer program loaded into a random access memory (RAM) 803 from a storage unit 808. In the RAM 803, various programs and data for operations of the electronic device 800 may also be stored. The computing unit 801, the ROM 802 and the RAM 803 are connected with each other through a bus 804. An input/output (I/O) interface 805 is also connected to the bus 804.

A plurality of components in the electronic device 800 are connected to the I/O interface 805, including: an input unit 806, an output unit 807, the storage unit 808 and a communication unit 809. The input unit 806 may be any type of device capable of inputting information to the electronic device 800. The input unit 806 may receive input numerical or character information and generate key signal input related to a user setting and/or function control of the electronic device, and may include but is not limited to a mouse, a keyboard, a touch screen, a trackpad, a trackball, a joystick, a microphone and/or a remote-control unit. The output unit 807 may be any type of device capable of presenting information and may include but is not limited to a display, a speaker, a video/audio output terminal, a vibrator and/or a printer. The storage unit 808 may include but is not limited to a magnetic disk and a compact disc. The communication unit 809 allows the electronic device 800 to exchange information/data with other devices through a computer network such as the Internet, and/or various telecommunication networks, and may include but is not limited to a modem, a network card, an infrared communication device, a wireless communication transceiver and/or a chipset such as a Bluetooth TM device, a 802.11 device, a WiFi device, a WiMax device, a cellular communication device and/or the like.

The computing unit 801 may be various general-purpose and/or application specific processing components with processing and computing capabilities. Some examples of the computing unit 801 include but are not limited to a central processing unit (CPU), a graphics processing unit (GPU), various application specific artificial intelligence (AI) computing chips, various computing units that run a machine learning model algorithm, a digital signal processor (DSP), and any appropriate processor, controller, microcontroller, and the like. The computing unit 801 performs various methods and processing described above, for example, the methods 200 and/or 400. For example, in some embodiments, the methods 200 and/or 400 may be implemented as a computer software program tangibly embodied on a machine readable medium, such as the storage unit 808. In some embodiments, part or all of the computer programs may be loaded and/or installed onto the electronic device 800 via the ROM 802 and/or the communication unit 809. When the computer program is loaded to the RAM 803 and executed by the computing unit 801, one or more steps of the methods 200 and/or 400 described above can be performed. Alternatively, in other embodiments, the computing unit 801 may be configured to perform the methods 200 and/or 400 in any other appropriate ways (for example, by means of firmware).

Various implementations of the systems and technologies described herein may be implemented in a digital electronic circuit system, an integrated circuit system, a field programmable gate array (FPGA), an application specific integrated circuit (ASIC), an application specific standard part (ASSP), a system on chip (SOC), a complex programmable logic device (CPLD), computer hardware, firmware, software and/or combinations thereof. These various implementations may include: being implemented in one or more computer programs which may be executed and/or interpreted on a programmable system including at least one programmable processor, wherein the programmable processor may be an application specific or general-purpose programmable processor and may receive data and instructions from a storage system, at least one input apparatus and at least one output apparatus, and transmit the data and the instructions to the storage system, the at least one input apparatus and the at least one output apparatus.

Program codes for implementing the methods of the present disclosure may be written in any combination of one or more programming languages. The program codes may be provided to processors or controllers of a general-purpose computer, an application specific computer or other programmable data processing apparatuses, such that the program codes, when executed by the processors or controllers, cause implementation of the functions/operations specified in the flow diagrams and/or block diagrams. The program codes may be executed entirely on a machine, partially on the machine, partially on the machine and partially on a remote machine as a stand-alone software package, or entirely on the remote machine or server.

In the context of the present disclosure, a machine readable medium may be a tangible medium that may include or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination thereof. More specific examples of the machine readable storage medium include electrical connections based on one or more wires, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination thereof.

In order to provide interactions with the users, the systems and techniques described herein may be implemented on a computer including: a display apparatus for displaying information to the users such as a CRT (cathode ray tube) or LCD (liquid crystal display) monitor; and a keyboard and a pointing device such as a mouse or trackball, through which the users may provide input to the computer. Other types of apparatuses may also be used to provide interactions with the users; for example, feedback provided to the users may be any form of sensory feedback such as visual feedback, auditory feedback, or tactile feedback; and an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which the user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally remote from each other and usually interact through a communication network. The relationship between the client and the server is generated by computer programs running on the respective computers and with a client-server relationship to each other. The server may be a cloud server, or a server of a distributed system, or a server combined with a blockchain.

It should be appreciated that various flows described above may be used, with steps reordered, added, or removed. For example, the steps described in the present disclosure may be executed in parallel, in sequence or in different orders, which is not limited herein if a desired result of the technical solutions of the present disclosure can be achieved.

Although the embodiments or examples of the present disclosure have been described with reference to the drawings, it should be appreciated that the methods, systems, and devices described above are merely example embodiments or examples, and the scope of the present invention is not limited by the embodiments or examples, but only defined by the granted claims and equivalent scopes thereof. Various elements in the embodiments or examples may be omitted or replaced with equivalent elements thereof. Moreover, various steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A computer-implemented traffic classification method, comprising:

   performing (S201) a preprocessing operation on each characteristic of one or more characteristics of an object to be classified, wherein the preprocessing operation comprises at least one of:

setting, in response to determining that a characteristic value of the characteristic is invalid data, the characteristic value to a null value;

converting, in response to determining that the characteristic is a non-numeric characteristic, the characteristic value of the characteristic to an integer value; and

normalizing, in response to determining that the characteristic is a non-port characteristic, the characteristic value of the characteristic; and

inputting (S202) the one or more characteristics of the object to be classified into a traffic classifier to determine a traffic type of the object to be classified.

2. The method according to claim 1, wherein converting, in response to determining that the characteristic is the non-numeric characteristic, the characteristic value of the characteristic to the integer value comprises:

in response to determining that the characteristic is an IP address characteristic, multiplying, for each segment of address of the characteristic, each segment of address of the characteristic by a factor corresponding to the segment of address to obtain a product corresponding to the segment of address; and

calculating a sum of products corresponding to each segment of address of the characteristic as the characteristic value of the characteristic.

3. The method according to claim 1, wherein normalizing, in response to determining that the characteristic is the non-port characteristic, the characteristic value of the characteristic comprises:

calculating (S301) a difference between the characteristic value of the characteristic and a lower limit value of the characteristic as a first difference;

calculating (S302) a difference between an upper limit value of the characteristic and the lower limit value of the characteristic as a second difference; and

calculating (S303) a ratio of the first difference to the second difference as the characteristic value of the characteristic.

4. The method according to any of claims 1-3, wherein the traffic classifier comprises at least one of: a K-nearest neighbor classifier; a decision tree classifier; and a random forest classifier, or

wherein the object to be classified is DoH traffic, and the traffic type of the object to be classified is benign traffic or malicious traffic.

5. The method according to any of claims 1-3, wherein the one or more characteristics of the object to be classified comprise at least one of: an IP address characteristic, a port characteristic, a duration characteristic, a characteristic of a number of bytes sent by stream, a characteristic of a number of bytes received by stream, a stream sending rate characteristic, a stream receiving rate characteristic, a frame length statistic characteristic, a frame time statistic characteristic and a response time statistic characteristic, or

wherein the preprocessing operation further comprises: removing a timestamp characteristic of the one or more characteristics of the object to be classified.

6. A training method of a traffic classifier, wherein a training set for the traffic classifier comprises a plurality of sample objects, and the training method comprises:

performing (S401) a preprocessing operation on each characteristic of one or more characteristics of each sample object, wherein the preprocessing operation comprises at least one of:

setting, in response to determining that a characteristic value of the characteristic is invalid data, the characteristic value to a null value;

converting, in response to determining that the characteristic is a non-numeric characteristic, the characteristic value of the characteristic to an integer value; and

normalizing, in response to determining that the characteristic is a non-port characteristic, the characteristic value of the characteristic; and

training (S402) the traffic classifier based on the one or more characteristics of the plurality of sample objects in the training set.

**7.** The method according to claim 6, wherein converting, in response to determining that the characteristic is the non-numeric characteristic, the characteristic value of the characteristic to the integer value comprises:

in response to determining that the characteristic is an IP address characteristic, multiplying, for each segment of address of the characteristic, each segment of address of the characteristic by a factor corresponding to the segment of address to obtain a product corresponding to the segment of address; and
calculating a sum of products corresponding to each segment of address of the characteristic as the characteristic value of the characteristic.

**8.** The method according to claim 6, wherein normalizing, in response to determining that the characteristic is the non-port characteristic, the characteristic value of the characteristic comprises:

calculating (S501) a minimum characteristic value of the characteristic of the plurality of sample objects in the training set as a lower limit value of the characteristic;
calculating (S502) a maximum characteristic value of the characteristic of the plurality of sample objects in the training set as an upper limit value of the characteristic;
calculating (S503) a difference between the characteristic value of the characteristic and the lower limit value of the characteristic as a first difference;
calculating (S504) a difference between the upper limit value of the characteristic and the lower limit value of the characteristic as a second difference; and
calculating (S505) a ratio of the first difference to the second difference as the characteristic value of the characteristic.

**9.** The method according to any of claims 6-8, wherein the traffic classifier comprises at least one of: a K-nearest neighbor classifier; a decision tree classifier; and a random forest classifier, or
wherein the sample object is DoH traffic, and a traffic type of the sample object comprises benign traffic or malicious traffic.

**10.** The method according to any of claims 6-8, wherein the one or more characteristics of the sample object comprise at least one of: an IP address characteristic, a port characteristic, a duration characteristic, a characteristic of a number of bytes sent by stream, a characteristic of a number of bytes received by stream, a stream sending rate characteristic, a stream receiving rate characteristic, a frame length statistic characteristic, a frame time statistic characteristic and a response time statistic characteristic, or
wherein the preprocessing operation further comprises: removing a timestamp characteristic of the one or more characteristics of the sample object.

**11.** The method according to any of claims 6-10, further comprising:

generating, for a traffic type with a proportion in the training set less than a proportion threshold, one or more extended objects based on the sample object corresponding to the traffic type; and
adding the one or more extended objects to the training set.

**12.** A traffic classification apparatus (600), comprising

a preprocessing module (601) configured to perform a preprocessing operation on each characteristic of one or more characteristics of an object to be classified, wherein the preprocessing operation comprises at least one of:

setting, in response to determining that a characteristic value of the characteristic is invalid data, the characteristic value to a null value;
converting, in response to determining that the characteristic is a non-numeric characteristic, the characteristic value of the characteristic to an integer value; and
normalizing, in response to determining that the characteristic is a non-port characteristic, the characteristic value of the characteristic; and

a traffic classification module (602) configured to input the one or more characteristics of the object to be classified into a traffic classifier to determine a traffic type of the object to be classified.

**13.** A training apparatus (700) of a traffic classifier, wherein a training set for the traffic classifier comprises a plurality of sample objects, and the training apparatus comprises:

> a preprocessing module (701) configured to perform a preprocessing operation on each characteristic of one or more characteristics of each sample object, wherein the preprocessing operation comprises at least one of:

>> setting, in response to determining that a characteristic value of the characteristic is invalid data, the characteristic value to a null value;
>> converting, in response to determining that the characteristic is a non-numeric characteristic, the characteristic value of the characteristic to an integer value; and
>> normalizing, in response to determining that the characteristic is a non-port characteristic, the characteristic value of the characteristic; and

> a classifier training module (702) configured to train the traffic classifier based on the one or more characteristics of the plurality of sample objects in the training set.

**14.** A non-transitory computer readable storage medium storing computer instructions, wherein the computer instructions are executed to cause a computer to perform the method according to any of claims 1-11.

**15.** A computer program product comprising a computer program, wherein the computer program, when executed by a processor, implements the method according to any of claims 1-11.

Fig. 1

200

PERFORMING A PREPROCESSING OPERATION ON EACH CHARACTERISTIC OF ONE OR MORE CHARACTERISTICS OF AN OBJECT TO BE CLASSIFIED — S201

INPUTTING THE ONE OR MORE CHARACTERISTICS OF THE OBJECT TO BE CLASSIFIED INTO A TRAFFIC CLASSIFIER TO DETERMINE A TRAFFIC TYPE OF THE OBJECT TO BE CLASSIFIED — S202

Fig. 2

S201

CALCULATING A DIFFERENCE BETWEEN THE CHARACTERISTIC VALUE OF THE CHARACTERISTIC AND A LOWER LIMIT VALUE OF THE CHARACTERISTIC AS A FIRST DIFFERENCE — S301

CALCULATING A DIFFERENCE BETWEEN AN UPPER LIMIT VALUE OF THE CHARACTERISTIC AND THE LOWER LIMIT VALUE OF THE CHARACTERISTIC AS A SECOND DIFFERENCE — S302

CALCULATING A RATIO OF THE FIRST DIFFERENCE TO THE SECOND DIFFERENCE AS THE CHARACTERISTIC VALUE OF THE CHARACTERISTIC — S303

Fig. 3

400

PERFORMING A PREPROCESSING OPERATION ON EACH CHARACTERISTIC OF ONE OR MORE CHARACTERISTICS OF EACH SAMPLE OBJECT — S401

TRAINING THE TRAFFIC CLASSIFIER BASED ON THE ONE OR MORE CHARACTERISTICS OF THE SAMPLE OBJECT IN THE TRAINING SET — S402

Fig. 4

S401

CALCULATING A MINIMUM CHARACTERISTIC VALUE OF THE CHARACTERISTIC OF THE PLURALITY OF SAMPLE OBJECTS IN THE TRAINING SET AS A LOWER LIMIT VALUE OF THE CHARACTERISTIC — S501

CALCULATING A MAXIMUM CHARACTERISTIC VALUE OF THE CHARACTERISTIC OF THE PLURALITY OF SAMPLE OBJECTS IN THE TRAINING SET AS AN UPPER LIMIT VALUE OF THE CHARACTERISTIC — S502

CALCULATING A DIFFERENCE BETWEEN THE CHARACTERISTIC VALUE OF THE CHARACTERISTIC AND THE LOWER LIMIT VALUE OF THE CHARACTERISTIC AS A FIRST DIFFERENCE — S503

CALCULATING A DIFFERENCE BETWEEN THE UPPER LIMIT VALUE OF THE CHARACTERISTIC AND THE LOWER LIMIT VALUE OF THE CHARACTERISTIC AS A SECOND DIFFERENCE — S504

CALCULATING A RATIO OF THE FIRST DIFFERENCE TO THE SECOND DIFFERENCE AS THE CHARACTERISTIC VALUE OF THE CHARACTERISTIC — S505

Fig. 5

TRAFFIC CLASSIFICATION APPARATUS
600

PREPROCESSING MODULE 601

TRAFFIC CLAISSIFICATION MODULE 602

Fig. 6

TRAINING APPARATUS OF TRAFFIC CLASSIFIER
700

PREPROCESSING
MODULE
701

CLASSIFIER
TRAINING MODULE
702

Fig. 7

800

801
COMPUTING
UNIT

802
ROM

803
RAM

804

805
I/O INTERFACE

806
INPUT UNIT

807
OUTPUT UNIT

808
STORAGE
UNIT

809
COMMUNICATIO
N UNIT

Fig. 8

Application Number

EP 22 18 3938

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim |
|---|---|---|
| X | AHUJA NISHA ET AL: "Automated DDOS attack detection in software defined networking", JOURNAL OF NETWORK AND COMPUTER APPLICATIONS, ACADEMIC PRESS, NEW YORK, NY, US, vol. 187, 19 May 2021 (2021-05-19), XP086602565, ISSN: 1084-8045, DOI: 10.1016/J.JNCA.2021.103108 [retrieved on 2021-05-19] | 1,5,6, 10,12-15 |
| Y | * 2 Related Work; 3.3 Dataset annotation; 3.5 Design of proposed method; 4 Experimental work and results * ----- | 2-4,7-9, 11 |
| Y | LI YUE ET AL: "Evaluation and Optimization of learning-based DNS over HTTPS Traffic Classification", 2021 INTERNATIONAL SYMPOSIUM ON NETWORKS, COMPUTERS AND COMMUNICATIONS (ISNCC), IEEE, 31 October 2021 (2021-10-31), pages 1-6, XP034030771, DOI: 10.1109/ISNCC52172.2021.9615659 [retrieved on 2021-11-15] * I. INTRODUCTION; II. RELATED WORKS; III. METHODOLOGY; * ----- | 2-4,7-9 |

-/--

**CLASSIFICATION OF THE APPLICATION  (IPC)**

INV.
H04L41/16

ADD.
H04L43/062

**TECHNICAL FIELDS SEARCHED      (IPC)**

H04L

The present search report has been drawn up for all claims

| Place of search | Date of completion of the search | Examiner |
|---|---|---|
| Munich | 30 November 2022 | Donnini, Carlo Luca |

EPO FORM 1503 03.82 (P04C01)

page 1 of 2

Europäisches
Patentamt

European
Patent Office

Office européen
des brevets

# EUROPEAN SEARCH REPORT

**Application Number**

EP 22 18 3938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PRABHAT KUMAR ET AL: "Design of Anomaly-Based Intrusion Detection System Using Fog Computing for IoT Network", AUTOMATIC CONTROL AND COMPUTER SCIENCES, ALLERTON PRESS, INC. NEW YORK, US, vol. 55, no. 2, 1 March 2021 (2021-03-01), pages 137-147, XP037453127, ISSN: 0146-4116, DOI: 10.3103/S0146411621020085 [retrieved on 2021-05-14] * 3.3.2. K-Nearest Neighbors (K-NN); 4.4. Testing Results * | 11 | |
| A | ASADI MEHDI ET AL: "Detecting botnet by using particle swarm optimization algorithm based on voting system", FUTURE GENERATION COMPUTER SYSTEMS, ELSEVIER SCIENCE PUBLISHERS. AMSTERDAM, NL, vol. 107, 1 February 2020 (2020-02-01), pages 95-111, XP086097287, ISSN: 0167-739X, DOI: 10.1016/J.FUTURE.2020.01.055 [retrieved on 2020-02-01] * 3.3 Data preparation; 4.1.2 Second scenario: Training and testing BD-PSO-V on Bot-IoT dataset * | 1-15 | **TECHNICAL FIELDS SEARCHED (IPC)** |

The present search report has been drawn up for all claims

| Place of search | Date of completion of the search | Examiner |
|---|---|---|
| Munich | 30 November 2022 | Donnini, Carlo Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)